# EUROPÄISCHE PATENTSCHRIFT

(11) **EP 2 465 160 B1**
(45) Veröffentlichungstag und Bekanntmachung des Hinweises auf die Patenterteilung: **17.02.2016**
(21) Anmeldenummer: 10751586.8
(22) Anmeldetag: 13.08.2010
(51) Int. Cl.: H01M 8/04, B01J 47/02

(54) **KÜHLVORRICHTUNG EINES FUNKTIONSSYSTEMS**
COOLING FACILITY FOR A FUNCTIONAL SYSTEM
DISPOSITIF DE REFROIDISSEMENT POUR UN SYSTÈME FONCTIONEL

(30) Priorität: 13.08.2009 DE 102009037080; 14.10.2009 DE 102009049427
(43) Veröffentlichungstag der Anmeldung: 20.06.2012
(73) Patentinhaber: Mann + Hummel GmbH, 71638 Ludwigsburg (DE); Daimler AG, 70327 Stuttgart (DE)
(72) Erfinder: BEYLICH, Markus, 71636 Ludwigsburg (DE); FASOLD, Michael, 71549 Auenwald (DE); TEUSCHEL, Peter, 71638 Ludwigsburg (DE); SCHWIENBACHER, Wolfgang, 73265 Dettingen (DE); KOCH, Christoph, 73230 Kirchheim (DE)
(86) Internationale Anmeldenummer: PCT/EP2010/061808
(87) Internationale Veröffentlichungsnummer: WO 2011/018508

(56) Entgegenhaltungen:
- EP-A1- 0 542 122
- EP-A1- 1 465 273
- DE-A1-102005 058 987
- JP-A- 2004 311 347
- US-A1- 2005 106 433
- US-A1- 2008 063 902
- US-A1- 2009 068 521
- US-A1- 2009 233 134

## Beschreibung

### Technisches Gebiet

Die Erfindung betrifft eine Kühlvorrichtung eines Funktionssystems, insbesondere eines Brennstoffzellensystems, insbesondere eines Kraftfahrzeugs, mit einem Leitungssystem für ein Kühlfluid, das zur Kühlung mit dem Funktionssystem verbunden ist, mit einem Behälter für das Kühlfluid, der mit dem Leitungssystem fluidleitend verbunden ist, und mit einem Ionentauscher zur Aufbereitung des Kühlfluids, der mit dem Leitungssystem fluidleitend verbunden ist, wobei der Behälter eine Aufnahme für den Ionentauscher aufweist, wobei der Behälter ein Ausgleichsbehälter ist, wobei das Kühlfluid von unten nach oben durch den Ionentauscher strömt und in dem Behälter Schwall- oder Schwappeinrichtungen, insbesondere Schwallwände und/oder Schwallrippen, für das Kühlfluid angeordnet sind.

Die Erfindung betrifft außerdem einen Kühlfluidbehälter, insbesondere Kühlfluid-Ausgleichsbehälter, einer Kühlvorrichtung eines Funktionssystems, insbesondere eines Brennstoffzellensystems, insbesondere eines Kraftfahrzeugs, der mit einem Leitungssystem für ein Kühlfluid fluidleitend verbindbar ist, das zur Kühlung mit dem Funktionssystem verbunden ist, wobei das Leitungssystem fluidleitend mit einem lonentauscher zur Aufbereitung des Kühlfluids verbunden ist, wobei der Kühlfluidbehälter einen stehend in dem Kühlfluidbehälter angeordneten Ionentauscher aufweist, wobei das Kühlfluid von unten nach oben durch den Ionentauscher strömt und in dem Behälter Schwall- oder Schwappeinrichtungen, insbesondere Schwallwände und/oder Schwallrippen, für das Kühlfluid angeordnet sind.

Außerdem betrifft die Erfindung eine lonentauscherkartusche zur Aufbereitung eines Fluides, insbesondere eines Kühlfluids, mit einem Kartuschendeckel und darin angeordnetem granulatartigem lonentauschermedium.

### Stand der Technik

Es ist vom Markt her bekannt, Brennstoffzellensysteme, Brennkraftmaschinen und andersartige wärmeerzeugende Funktionssysteme im mobilen oder stationären Einsatz mit Kühlkreisläufen auszustatten, um sie zu Gewährleistung ihrer Funktion in einem optimalen Temperaturbereich zu halten. In den Kühlkreisläufen zirkulieren vorzugsweise flüssige Kühlmittel (d.h. Kühlfluide), insbesondere Kühlwasser oder Mischungen aus Kühlwasser und Glykol. In den Kühlkreisläufen befinden sich Ausgleichsbehälter für das flüssige Kühlmittel. Um eine optimale Kühlung und Lebensdauer aller Bauteile des Kühlkreislaufs und des Funktionssystems zu gewährleisten, ist es bekannt, das Kühlmittel im Kühlkreislauf mit entsprechenden zusätzlichen Ionentauschern aufzubereiten. Bekanntermaßen werden hierbei Filter und/oder Ionentauscher im Kühlmittelkreislauf eingesetzt, mit denen das Kühlmittel im Betrieb gereinigt beziehungsweise von unerwünschten Ionen befreit werden kann. Insbesondere bei Brennstoffzellensystemen ist es notwendig, dass das Kühlfluid entsalzt wird, da ansonsten die Gefahr eines Kurzschlusses durch die Leitfähigkeit des Kühlfluids gegeben ist.

Die Ionentauscher erhöhen aber den Platzbedarf der Kühlvorrichtung, zumal sie zu Wartungszwecken möglichst gut zugänglich sein sollten. Diese Bedingungen sind insbesondere beim Einsatz in Kraftfahrzeugen, wo nur ein begrenzter Einbauraum zur Verfügung steht, nicht einfach zu erfüllen. Aus der JP 2004311347 A1 ist ein Kühlsystem für ein Brennstoffzellensystem bekannt geworden, bei dem am unteren Ende des Kühlfluid-Ausgleichsbehälters ein Ionentauscher angeordnet ist.

Der Erfindung liegt die Aufgabe zugrunde, eine Kühlvorrichtung, , einen Kühlfluidbehälter und eine lonentauscherkartusche der eingangs genannten Art zu gestalten, die einfach und zuverlässig eine Behandlung des Fluides ermöglichen, die für die Funktion des Fluides optimal ist, insbesondere die Temperatur und die Zusammensetzung des Fluides optimieren und die Verweilzeit und somit den Austausch von Ionen aus dem Fluid verbessern, und möglichst platzsparend aufgebaut sind.

### Offenbarung der Erfindung

Diese Aufgabe wird erfindungsgemäß dadurch gelöst, dass der Behälter eine Aufnahme für den Ionentauscher aufweist.

Erfindungsgemäß ist also der Ionentauscher platzsparend in dem Behälter integriert, so dass der Behälter und der Ionentauscher ein geschlossenes Bauteil bilden. Die Form des Behälters kann einfach an einen zur Verfügung stehenden Bauraum angepasst werden. Der Behälter mit dem ionentauscher kann an einer gut zugänglichen Stelle montiert werden, so dass der Behälter und der Ionentauscher insbesondere zu Wartungszwecken einfach erreichbar ist. Fluidanschlüsse des Ionentauschers sind im Behälter integriert, so dass die Gesamtzahl der Anschlüsse verringert wird, was die Montage vereinfacht. Separate Leitungen von dem Ionentauscher zum Leitungssystem, wie dies bei aus dem Stand der Technik bekannten Kühlvorrichtungen üblich ist, entfallen. Durch die Verringerung der außerhalb des Behälters liegenden Anschlüsse und Leitungen wird außerdem die Gefahr von Leckagen verringert. Der Behälter und der lonentauscher können auf der kalten Seite der Kühlvorrichtung, insbesondere in Strömungsrichtung des Kühlfluids vor dem Funktionssystem , oder auf der heißen Seite der Kühlvorrichtung, insbesondere in Strömungsrichtung hinter dem Funktionssystem, oder in einer Bypass-Leitung angeordnet sein. Vorteilhafterweise kann die Kühlvorrichtung einen Kühlfluidkreislauf aufweisen, in dem das Funktionssystem angeordnet ist. Der Behälter kann auch Teil eines Kühlers, insbesondere ein Sammler, sein, so dass der Ionentauscher im Kühler integriert ist.

Bei einer vorteilhaften Ausführungsform kann der Behälter ein Ausgleichsbehälter sein. Der Ausgleichsbehälter, der in einer insbesondere als Kühlkühlkreislauf ausgestalteten Kühlvorrichtung häufig ohnehin vorhanden ist, kann auf der kalten Seite der Kühlvorrichtung angeordnet werden, so dass die Anforderungen an die Temperaturbeständigkeit des Ionentauschers geringer sein können. Der Ionentauscher kann so einfacher und preiswerter ausgestaltet sein.

Bei einer weiteren vorteilhaften Ausführungsform kann der Behälter insbesondere räumlich oben eine verschließbare Öffnung aufweisen, durch die der Ionentauscher in einen Innenraum des Behälters insbesondere austauschbar eingebracht werden kann. Auf diese Weise ist ein wartungsfreundlicher Austausch von Austauschteilen des lonentauschers oder des ganzen Ionentauschers von oben möglich. Dies ist insbesondere bei der Verwendung bei Kraftfahrzeugen von großem Vorteil, wo aufgrund des begrenzten Einbauraums bei aus dem Stand der Technik bekannten Kühlvorrichtungen der Austausch von Austauschteilen des Ionentauschers bisher nur von unten möglich war. Hierzu muss das Kraftfahrzeug angehoben oder über einer Grube platziert und eine Bodenverkleidung abgenommen werden, um an das Austauschteil zu gelangen.

Bei einer weiteren vorteilhaften Ausführungsform kann der Ionentauscher einen lonentauscher aufweisen, insbesondere eine lonentauscherkartusche sein. Mit einem lonentauscher kann einfach und effizient vorzugsweise mittels Umsalzung, Teilentsalzung oder Vollentsalzung insbesondere die Leitfähigkeit eines wässrigen Kühlfluids reduziert werden, was insbesondere bei Brennstoffzellensystemen erforderlich ist. Es können auch Ionentauscher verwendet werden, die zur Enthärtung von wässrigem Kühlfluid geeignet sind, um eine Kalkabscheidung in der Kühlvorrichtung zu vermindern oder gänzlich zu unterbinden. Ionentauscherkartuschen können einfach ausgetauscht werden.

Vorteilhafterweise kann der Ionentauscher eine Presseinrichtung zur Pressung eines granulatartigen lonentauschermediums aufweisen. Durch die Pressung wird verhindert, dass das Kühlfluid bei der Durchströmung des Ionentauschers bevorzugte Strömungswege bildet, was zu einer ungleichmäßigen Belastung des lonentauschermediums und zu einer Verkürzung der Standzeit führt. Die Presseinrichtung kann vorzugsweise eine mit einer vorgespannten Feder belastete Pressscheibe aufweisen. Die Feder kann dabei vorzugsweise so angeordnet sein, dass sie mit dem Kühlfluid nicht in Berührung kommt, so dass eine Korrosion oder eine andersartige chemische Reaktion mit dem Material der Feder ausgeschlossen wird.

Ferner kann vorteilhafterweise der Behälter und/oder der Ionentauscher wenigstens ein Bauteil, insbesondere eine Ummantelung fürden Ionentauscher, aufweisen, das eine Strömung des Kühlfluids durch den Ionentauscher vorgibt. Auf diese Weise wird sichergestellt, dass das Kühlfluid den Ionentauscher durchströmt und entsprechend aufbereitet wird.

Um zu verhindern, dass das Kühlfluid bei Bewegungen des Behälters hin und her schwappt, können vorteilhafterweise in dem Behälter Schwall- oder Schwappeinrichtungen, insbesondere Schwallwände und/oder Schwallrippen, für das Kühlfluid angeordnet sein. Insbesondere bei der Verwendung bei Kraftfahrzeugen, bei denen der Behälter bei einer Fahrt bewegt wird, ist dies von großem Vorteil.

Der Behälter, insbesondere der Ausgleichsbehälter, kann sich in einer Bypass-Leitung befinden, die mit einem Hauptleitungssystem zur Kühlung des Brennstoffzellensystems fluidleitend verbunden ist. Zur Steuerung der Strömung des Kühlfluids durch die Bypass-Leitung und den Ausgleichsbehälter kann in dem Hauptleitungssystem ein Thermoventil angeordnet sein.

Die Aufgabe wird ferner erfindungsgemäß dadurch gelöst, dass der Ionentauscher so ausgestaltet ist, dass sie in einer entsprechenden Aufnahme des Behälters angeordnet werden kann. Die oben genannten Vorteile der Kühlvorrichtung gelten für den lonentauscher entsprechend.

Bei einer vorteilhaften Ausführungsform kann der Ionentauscher insbesondere eine Ionentauscherkartusche sein, die eine Presseinrichtung zur Pressung eines granulatartigen lonentauschermediums aufweist.

Die Aufgabe wird außerdem erfindungsgemäß dadurch gelöst, dass der Kühlfluidbehälter, insbesondere der Kühlfluid-Ausgleichsbehälter, eine Aufnahme zur Integration des Ionentauschers und/oder einen stehend in dem Behälter angeordneten Ionentauscher aufweist. Die oben genannten Vorteile der Kühlvorrichtung gelten für die Kühlfluidbehälter entsprechend.

Hierbei kann der Kühlfluid-Ausgleichsbehälter für das Brennstoffzellensystem bzw. die Brennstoffzelleneinrichtung eines Fahrzeugs zum Durchströmen mit Kühlmittel ausgebildet sein, welches zum Kühlen der Brennstoffzelleneinrichtung vorgesehen ist. Der Kühlmittelausgleichsbehälter kann einen Ionentauscher umfassen, der stehend in dem Behälter angeordnet ist.

Durch diese spezifische Positionierung des Ionentauschers in dem Behälter kann im Hinblick auf den Verbau des Kühlmittel-Ausgleichsbehälters in dem Brennstoffzellensystem und somit auch im Fahrzeug eine verbesserte Zugänglichkeit und Handhabbarkeit erreicht werden. Gerade für Montagezwecke, für Prüfzwecke und dergleichen ist dies besonders vorteilhaft.

Darüber hinaus kann durch die stehende Positionierung der Ionenaustauschereinheit bzw. des Ionentauschers auch deren Funktionalität im Hinblick auf die Wirksamkeit des lonentauschermaterials bzw. -mediums verbessert werden. Viele anfällige Verbindungsstellen zwischen der lonentauscherpatrone bzw. -kartusche und dem Kühlmittelkreislauf, die undicht werden könnten, können dadurch diesbezüglich unkritischer gestaltet werden. Des Weiteren kann eine kompakte und bauraumminimierte Ausgestaltung erreicht werden. Insbesondere ermöglicht die stehende Anordnung des lonentauschers auch eine verbesserte Reinigung des Kühlmittels im Hinblick auf die Entfernung von Metallionen aus dem Kühlmittel.

Das flüssige Kühlmittel eines Brennstoffzellensystems muss üblicherweise vor allen Dingen im Hinblick auf Metallionen so rein wie möglich sein, da diese die PEM (Proton Exchange Membrane) und/oder die Katalysatorschichten von PEM-Brennstoffzellen vergiften können. Dazu wird üblicherweise eine Ionenaustauscherpatrone bzw. - kartusche in den Kühlmittelkreislauf integriert. Die lonentauscherkapazität des lonentauschermaterials nimmt jedoch mit der Zeit ab, so dass die lonentauscherkartusche regelmäßig gewechselt werden muss. Dazu sollte sie möglichst an einer gut zugänglichen Stelle angeordnet sein. Durch die Integration des Ionentauschers in den Behälter und darüber hinausgehend durch die spezifische Positionsorientierung kann die Wirkung des lonentauschermaterials verbessert werden.

Durch die erfindungsgemäße Konstruktion kann vorteilhafterweise eine längere Verweildauer des flüssigen Kühlmittels in der lonentauscherkartusche erreicht werden. Dadurch verlängert sich die Kontaktzeit des Kühlmittels mit dem lonentauschermedium, wodurch sich die Effizienz des Ionenaustauschs verbessert. Die Reinigungswirkung wird dadurch verbessert, wodurch das Kühlmittel noch reiner wird. Darüber hinaus ist die Austauschbarkeit der lonentauscherkartusche wesentlich verbessert. Es muss kein Kühlmittel mehr abgelassen werden und die Ionentauscherkartusche kann einfach entnommen werden, wodurch das Problem des Eintrags schädlicher Verschmutzungen in dem Kühlkreislauf vermieden werden kann. Bei der erfindungsgemäßen Konstruktion des Kühlmittel-Ausgleichsbehälters mit der spezifischen Positionierung der lonenaustauschereinheit bzw. des Ionentauschers kann ohne Ablassen des Kühlmittels bequem und effizient diese Einheit entfernt und ersetzt werden und der Eintrag von Verschmutzungen in den Kühlkreislauf zumindest reduziert oder sogar weitgehend vermieden werden.

Durch die Integration und die dadurch eingesparten Schnittstellen ergibt sich ein einfacherer, prozesssicherer Montagevorgang, was Leckagen im Kühlsystem vorbeugt. Ein geführtes Einrasten des Ionentauschers verhindert darüber hinaus ein mögliches Verrutschen und stellt die volle Funktionsfähigkeit her. Gerade eine derartige spezifische zerstörungsfrei lösbare Verbindung in Form einer Verrastung ermöglicht das positionsstabile Anbringen bei dennoch einfachem Separieren des Ionentauschers von dem Kühlmittel-Ausgleichsbehälter.

Unter einer stehenden Anbringung des Ionentauschers in dem Behälter wird eine Positionierung verstanden, bei der die Längsachse des Ionentauschers maximal in einem Winkel von 45° gegenüber der Längsachse des Kühlmittel-Ausgleichsbehälters angeordnet ist. Insbesondere und in besonders vorzugsweiser Anordnung ist vorgesehen, dass die Längsachse des Kühlmittel-Ausgleichsbehälters und die Längsachse des Ionentauschers parallel oder koaxial angeordnet sind, so dass der Ionentauscher senkrecht in dem Kühlmittel-Ausgleichsbehälter angeordnet ist. Die vorab genannten Vorteile können dadurch in besonderer Weise erreicht werden. Darüber hinaus kann durch diese stehende, insbesondere senkrechte Anordnung des Ionentauschers die Ausschwemmung des lonentauschermaterials vermieden und somit die Wirkung des lonentauschers verbessert werden. Insbesondere durch das senkrechte Positionieren des Ionentauschers und eine Durchströmung des Ionentauschers mit Kühlmittel vorzugsweise von unten nach oben ggf. aber auch von oben nach unten wird die Verweilzeit und somit der Austausch von Ionen aus dem Kühlmittel heraus in das lonentauschermaterial verbessert. Durch die Reduktion der Schnittstellen und die Integration von zwei Komponenten in ein Bauteil sind Vorteile bei Montage-, Service- und Wartungsarbeiten und Gewichtsvorteile vorhanden. Durch das Einrasten der lonentauscherkartusche ist diese schnell und ohne weitere Halterungen montiert und widersteht selbst fahrzeugtypischen Vibrationen (Rütteln) problemlos ohne sich zu lockern oder zu verrutschen.

Durch ein Einrasten der Patrone bzw. Kartusche in eine definierte Schnittstelle im Ausgleichsbehälter sind außerdem Montageteile wie Schrauben und Schlauchklemmen überflüssig.

Bisher waren bei bekannten Ausgestaltungen die lonentauscherpatronen bzw. -kartuschen waagrecht im Fahrzeug angeordnet, was zur Kanalbildung, zur Ausschwemmung und Zersetzung im lonentauschermaterial der Patrone geführt hat. Dies hat zur Folge, dass das Kühlmittel sich den Weg des geringsten Widerstandes durch die Patrone sucht und ohne ein Austauschen von Ionen an den lonentauschermaterial durch den Ionentauscher fließt. Durch eine erfindungsgemäße stehende, insbesondere senkrechte, Anordnung des Ionentauschers kann sich dieser Schwerkraft-Effekt nicht bemerkbar machen. Vorzugsweise ist der Ausgleichsbehälter aus physikalischen Gründen immer soweit als möglich oben im Fahrzeug positioniert, um eine Entlüftungsfunktion gewährleisten zu können. Durch die leichte Zugänglichkeit ist es auch ermöglicht, dass das Wartungsteil in Form des Ionentauschers bequem von oben zugänglich ist und getauscht werden kann, ohne andere Bauteile demontieren zu müssen.

In einer Ausführungsform weist der Kühlfluidbehälter an seinem oberen Ende (seitlich oben) eine Auslassöffnung zum Ableiten des Kühlfluids aus dem Sammelraum auf.

Bei einer weiteren Ausführungsform weist der Kühlfluidbehälter einen Deckel für den Aus- und Einbau des Ionentauschers auf, der eine Feder aufweist, um auf eine obere Wand des Ionentauschers zu wirken. Dadurch kann der Ionentauscher weiter fixiert werden, um diesen noch besser gegenüber Verrutschen infolge von Rütteln o.ä. zu sichern.

Die Feder des Deckels für den Aus- und Einbau des Ionenaustauschers kann auch die zusätzliche Funktion des Zusammenpressens des Ionenaustauschermediums erfüllen. Bei einer Ausführungsform weist der Kühlfluidbehälter einen Nachfüllstutzen zum Nachfüllen von Kühlfluid auf. Der Nachfüllstutzen kann mit einem Schraubverschluss verschließbar sein, welcher über ein Druckausgleichssystem verfügt.

Der Schraubverschluss zum Verschließen des Nachfüllstutzens kann in einer Ausführungsform mit einer Ionenaustauscherkartusche integral verbunden sein, z.B. derart, dass der Schraubverschluss durch Wechseln der Ionenaustauscherkartusche mit dieser gewechselt wird.

Bei einer weiteren Ausführungsform weist der Kühlfluidbehälter einen Füllstandssensor, bevorzugt mit einem Schwimmer, auf. Ein Anschluss des Füllstandssensors kann hierbei von außen zugänglich am Boden des Ausgleichsbehälters angeordnet sein.

Die Aufgabe wird schließlich erfindungsgemäß gelöst durch die lonentauscherkartusche mit einer Presseinrichtung zum Pressen des lonentauschermediums. Dies hat den Vorteil, dass das lonentauschermedium gleichmäßig gepresst und die Ausbildung von bevorzugten Strömungskanälen verhindert wird. Das lonentauschermedium wird von dem aufzubereitenden Fluid gleichmäßig durchströmt, was lonentausch-Effizienz und die Standzeiten erhöht. Auf diese Weise kann die lonentauscherkartusche kompakt und platzsparend aufgebaut sein.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
- Figur 1: schematisch einen Kühlkreislauf eines Brennstoffzellensystems eines Kraftfahrzeugs mit einem Ausgleichsbehälter, in dem eine Ionentauscherkartusche integriert ist;
- Figur 2: schematisch eine erste Seitenansicht eines ersten Ausführungsbeispiels eines Ausgleichsbehälters mit lonentauscherkartusche, wie sie in dem Kühlkreislauf aus Figur 1 Verwendung finden;
- Figur 3: schematisch eine zweite Seitenansicht des Ausgleichsbehälters aus Figur 2;
- Figur 4: schematisch eine Ansicht des Ausgleichsbehälters aus Figur 2 von schräg oben;
- Figur 5: schematisch einen Längsschnitt des Ausgleichsbehälters aus Figur 2 entlang der dortigen Linie V-V;
- Figur 6: schematisch einen Querschnitt des Ausgleichsbehälters aus Figur 2 entlang der dortigen Linie VI-VI;
- Figur 7: schematisch einen Längsschnitt eines Ausschnitts eines zweiten Ausführungsbeispiels eines Ausgleichsbehälters mit lonentauscherkartusche, wie sie in dem Kühlkreislauf aus Figur 1 Verwendung finden;
- Figur 8: schematisch einen Längsschnitt eines Ausschnitts eines dritten Ausführungsbeispiels eines Ausgleichsbehälters mit lonentauscherkartusche, wie sie in dem Kühlkreislauf aus Figur 1 Verwendung finden;
- Figur 9: schematisch eine isometrische Darstellung einer zu der Ionentauscherkartusche aus Figur 8 ähnlichen lonentauscherkartusche;
- Figur 10: schematisch einen Kartuschendeckel der lonentauscherkartusche aus Figur 9;
- Figur 11: schematisch einen Schnitt des Kartuschendeckels aus Fig. 9 und 10;
- Figur 12: schematisch eine Explosionsdarstellung eines Kühlers, in dessen Sammler eine lonentauscherkartusche angeordnet ist;
- Figur 13: eine Schnittdarstellung eines Ausführungsbeispiels eines KühlmittelAusgleichsbehälters;
- Figur 14: ein weiteres Ausführungsbeispiel eines Kühlmittel-Ausgleichsbehälters;
- Figur 15: die zusätzliche Fixierung des Ionentauschers mit Hilfe einer Feder gemäß einem weiteren Ausführungsbeispiel eines Kühlmittel-Ausgleichsbehälters.

In den Figuren sind gleiche Bauteile mit gleichen Bezugszeichen versehen.

### Ausführungsform(en) der Erfindung

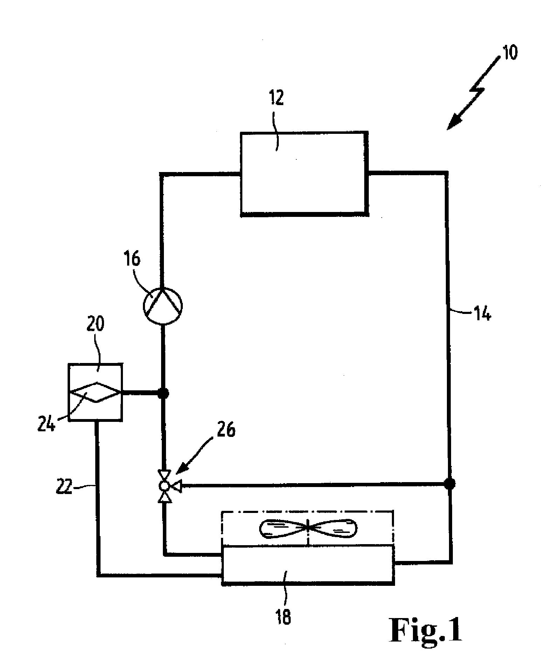

In Figur 1 ist ein Kühlkreislauf 10 eines Brennstoffzellensystems 12 eines Kraftfahrzeugs dargestellt. Das Brennstoffzellensystem 12 kann eine oder mehrere Brennstoffzellen aufweisen.

Der Kühlkreislauf 10 umfasst ein Hauptleitungssystem 14 für ein Kühlfluid, welches aus Kühlwasser oder einer wässrigen Kühlfluid-Mischung besteht. Das Hauptleitungssystem 14 ist zur Kühlung mit dem Brennstoffzellensystem 12 verbunden. Im Hauptleitungssystem 14 befindet sich ferner eine Pumpe 16 für das Kühlfluid und ein Wärmetauscher 18 in Form eines Kühlers.

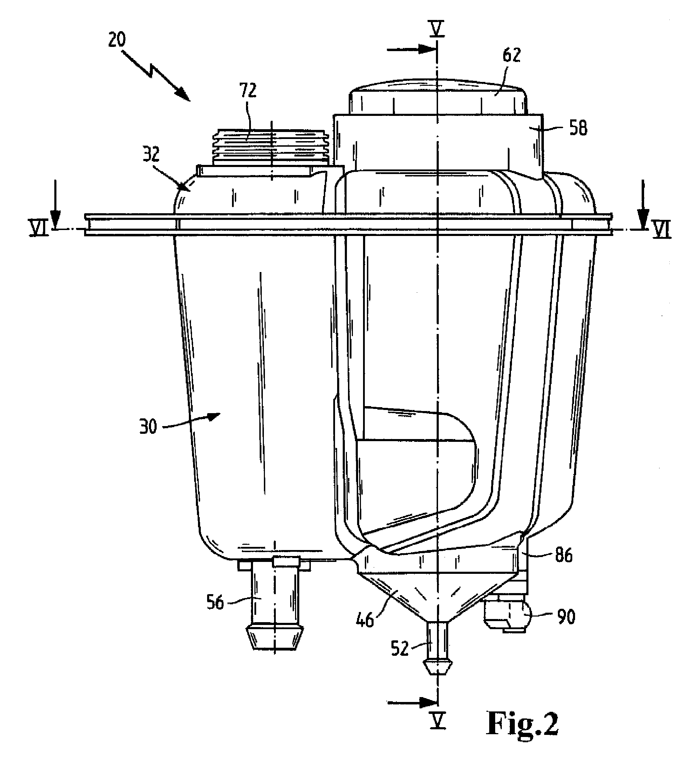

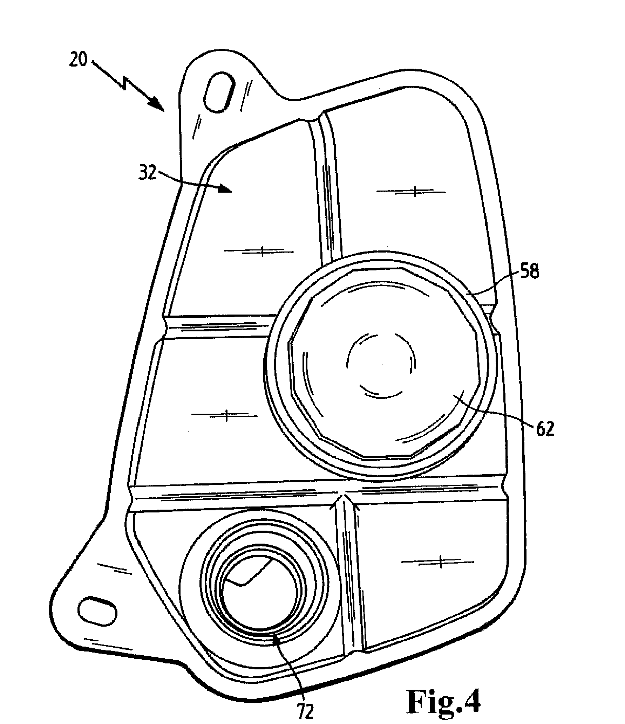

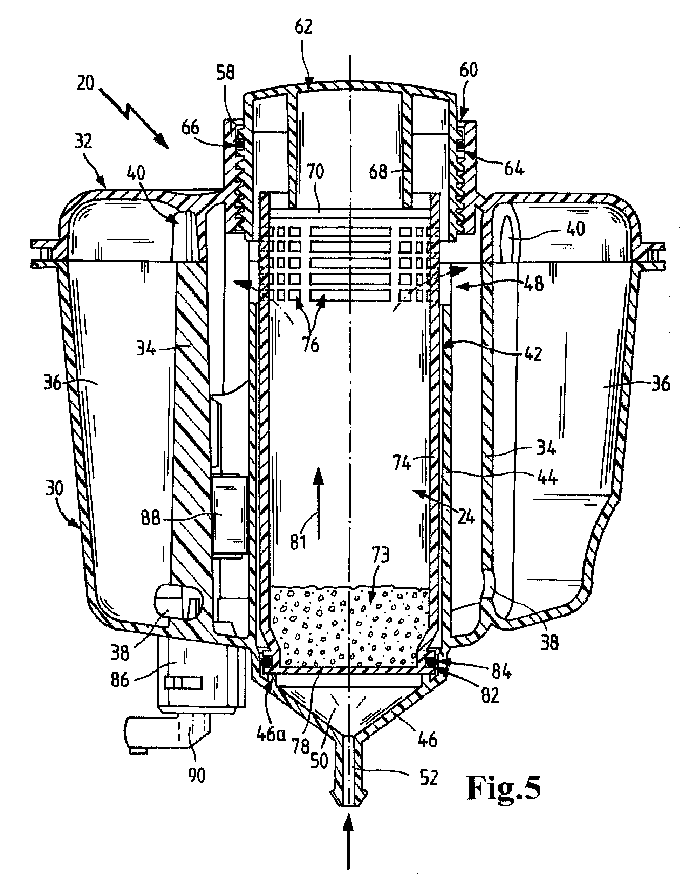

Der Kühlkreislauf 10 umfasst ferner einen in den Figuren 2 bis 6 im Detail gezeigten Ausgleichsbehälter 20 für das Kühlfluid. Der Ausgleichsbehälter 20 befindet sich in einer Bypass-Leitung 22, die mit dem Hauptleitungssystem 14 fluidleitend verbunden ist. In dem Ausgleichsbehälter 20 ist eine lonentauscherkartusche 24 zur Aufbereitung des Kühlfluids integriert. Mit der lonentauscherkartusche 24 wird die Leitfähigkeit des Kühlfluids verringert. in dem Hauptleitungssystem 14 ist ein Thermoventil 26 angeordnet. Über das Thermoventil 26 wird in hier nicht weiter interessierender Weise die Strömung des Kühlfluids durch die Bypass-Leitung 22 und den Ausgleichsbehälter 20 gesteuert. Der in Figur 5 im Schnitt gezeigte Ausgleichsbehälter 20 umfasst ein Basisteil 30, der mit einem Deckelteil 32 dicht verschlossen ist. Das Deckelteil 32 ist mit dem Basisteil 30 verschweißt.

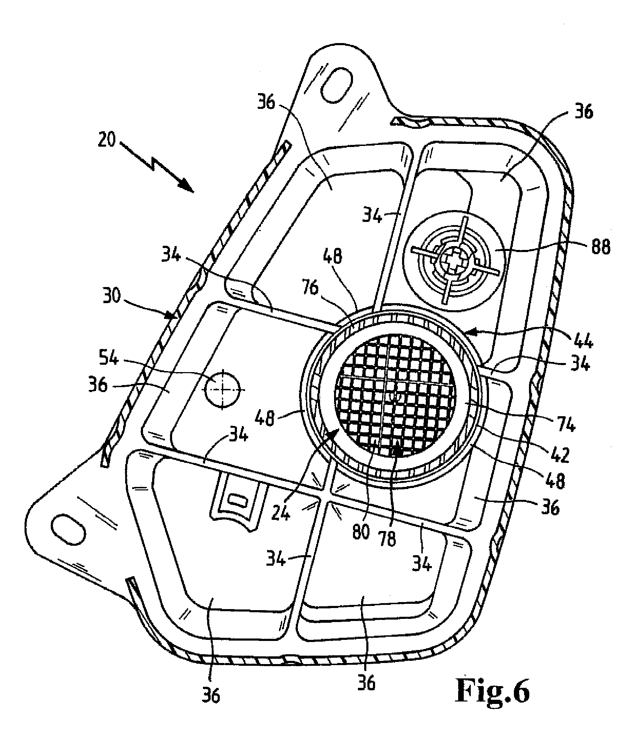

In dem Ausgleichsbehälter 20 sind Schwallwände 34 für das Kühlfluid angeordnet, die den Ausgleichsbehälter 20, wie in Figur 6 gezeigt, in 6 Kammern 36 unterteilt. Die Schwallwände 34 verhindern, dass das Kühlfluid bei Bewegungen des Ausgleichsbehälters 20 hin und her schwappt. Die Schwallwände 34 weisen im unteren Bereich Durchströmöffnungen 38 auf, durch die das Kühlfluid zwischen den Kammern 36 strömen kann. In ihren oberen Bereichen weisen die Schwallwände 34 Ausgleichsöffnungen 40 auf, durch die insbesondere zum Druckausgleich Luft zwischen den Kammern 36 strömen kann.

In einer Aufnahmekammer 42 des Ausgleichsbehälters 20 ist die lonentauscherkartusche 24 angeordnet. Die Aufnahmekammer 42 ist durch einen Innenzylinder 44 begrenzt, in dem die lonentauscherkartusche 24 eingesteckt ist. Der Innenzylinder 44 ist, wie in der Figur 5 gezeigt, umfänglich dicht mit dem Boden des Ausgleichsbehälters 20 verbunden. Der Boden des Ausgleichsbehälters 20 bildet auch einen Kammerboden 46 der Aufnahmekammer 42. Der obere Rand des Innenzylinders 44 ist frei, so dass dort Verbindungsöffnungen 48 zu den an den Innenzylinder 44 angrenzenden Kammern 36 des Ausgleichsbehälters 20 realisiert sind. Der abgestufte, insgesamt trichterartig geformte Kammerboden 46 begrenzt einen Zulaufraum 50, in den ein Zulaufstutzen 52 führt. Der Zulaufstutzen 52 ist zur Zuführung von Kühlfluid in den Ausgleichsbehälter 20 mit der Bypass-Leitung 22 verbunden. An der der lonentauscherkartusche 24 zugewandten Innenseite des Kammerbodens 46 ist ein zum Innenzylinder 44 koaxialer Auflagering angeformt, auf den sich die lonentauscherkartusche 24 in axialer Richtung abstützt.

Die Schwallwände 34, der Innenzylinder 44 und das Basisteil 30 sind vorzugsweise einstückig bevorzugt aus Kunststoff ausgebildet.

Die lonentauscherkartusche 24 ist über den Zulaufraum 50 und den Zulaufstutzen 52 mit der Bypass-Leitung 22 fluidleitend verbunden.

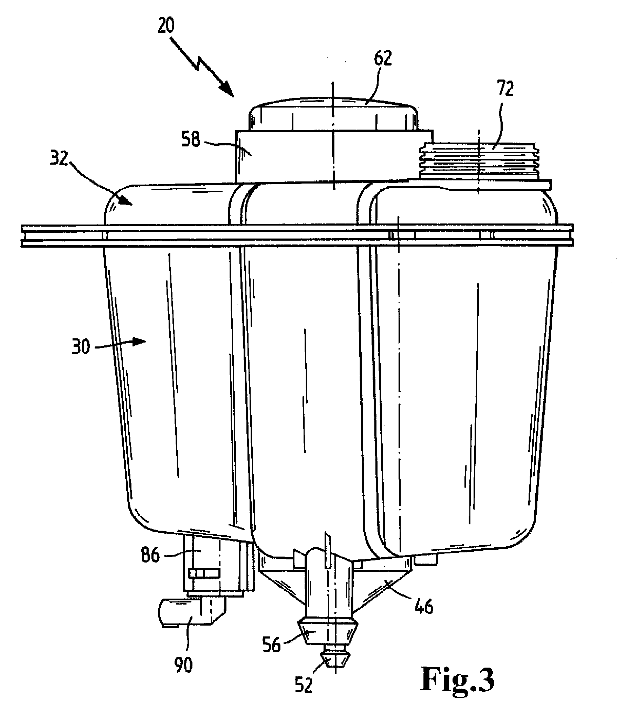

Neben der Aufnahmekammer 42 ist im Boden des Ausgleichsbehälters 20 eine in der Figur 6 gezeigte Austrittsöffnung 54 angeordnet, die an der Außenseite des Ausgleichsbehälters 20 von einem in den Figuren 2 und 3 dargestellten Austrittsstutzen 56 umgeben ist. Der Austrittsstutzen 56 ist zur Abführung von Kühlfluid aus dem Ausgleichsbehälter 20 mit der Bypass-Leitung 22verbunden.

Der Ausgleichsbehälter 20 weist räumlich oben am Deckelteil 32 einen Aufnahmestutzen 58 mit einer zu dem Innenzylinder 44 der Aufnahmekammer 42 koaxialen Aufnahmeöffnung 60 auf. Durch die Aufnahmeöffnung 60 kann die lonentauscherkartusche 24 in die Aufnahmekammer 42 des Ausgleichsbehälters 20 eingebracht und einfach ausgetauscht werden. Der Aufnahmestutzen 58 weist ein Innengewinde auf, in das zum Verschließen der Aufnahmeöffnung 60 ein becherförmiger Aufnahmedeckel 62 mit einem Außengewinde eingeschraubt ist. Der Aufnahmedeckel 62 weist eine umfängliche Dichtungsnut 64 mit einer Ringdichtung 66 auf, die den Aufnahmedeckel 62 gegen den Aufnahmestutzen 58 abdichtet. Die offene Stirnseite des Aufnahmedeckels 62 zeigt zum Inneren des Ausgleichsbehälters 20 hin. Im Inneren des Aufnahmedeckels 62 ist ein sich in axialer Richtung erstreckender hohler Schubzylinder 68 befestigt, vorzugsweise einstückig mit dem Aufnahmedeckel 62, dessen freier Rand beim Einschrauben des Aufnahmedeckels 62 axial zum Innenzylinder 44 gegen eine Pressscheibe 70 der lonentauscherkartusche 24 drückt.

Neben dem Aufnahmestutzen 58 ist am Deckelteil 32 ein Nachfüllstutzen 72 zum Nachfüllen von Kühlfluid angeordnet. Der Nachfüllstutzen 72 ist mit einem in den Figuren 1 bis 6 nicht gezeigten Schraubverschluss verschließbar, welcher über ein nicht weiter interessierendes Druckausgleichssystem verfügt.

Die lonentauscherkartusche 24 ist gefüllt mit in Figur 5 lediglich angedeutetem lonentauscher-Granulat 73, auf dessen Wirkungsweise hier nicht weiter eingegangen wird. Die lonentauscherkartusche 24 weist eine Ummantelung 74 auf, die in einem oberen Bereich Ausströmöffnungen 76 für das Kühlfluid aufweist. Die Ausströmöffnungen 76 fluchten mit den Verbindungen 48 des Innenzylinders 44. Ein Kartuschenboden 78 der lonentauscherkartusche 24 weist in Figur 6 gezeigte Einströmöffnungen 80 auf, durch die das Kühlfluid aus dem Zulaufraum 50 in das Innere der lonentauscherkartusche 24 strömen kann.

Das Kühlfluid muss das lonentauscher-Granulat 73 von unten nach oben in Richtung eines Pfeils 81 durchströmen und wird dort aufbereitet. Es kann nur durch die Ausströmöffnungen 76 aus der lonentauscherkartusche 24 gelangen. Auf diese Weise ist die Strömung des Kühlfluids durch die lonentauscherkartusche 24 vorgegeben. Von den Ausströmöffnungen 76 strömt das aufbereitete Kühlfluid durch die Verbindungsöffnungen 48 in die Kammern 36. Von dort aus strömt das Kühlfluid über Austrittsöffnung 54 und Austrittsstutzen 56 in die Bypass-Leitung 22b.

Der Innenzylinder 44 ummantelt die lonentauscherkartusche 24 zusätzlich. Bei der Verwendung einer nicht gezeigten alternativen lonentauscherkartusche mit fluiddurchlässiger, beispielsweise gitterartiger Ummantelung gibt der Innenzylinder 44 die Strömung des Kühlfluids durch die lonentauscherkartusche vor, indem er verhindert, dass das Kühlfluid bereits in einem unteren Bereich der lonentauscherkartusche 24 durch die Ummantelung aus dieser austritt, ohne das gesamte lonentauscher-Granulat 73 durchströmt zu haben.

Die Ummantelung 74 ist im Bereich des Kartuschenbodens 78 abgestuft und an die Form des Kammerbodens 46 angepasst. Die Ummantelung 74 weist eine umfängliche Dichtungsnut 82 mit einer Ringdichtung 84 auf. Die Ringdichtung 84 dichtet die Ummantelung 74 radial gegen einen in axialer Richtung verlaufenden Bereich am Kammerboden 46 ab.

An ihrer oberen Stirnseite ist die lonentauscherkartusche 24 mit der Pressscheibe 70 verschlossen, welche in der Ummantelung 74 der lonentauscherkartusche 24 in axialer Richtung verschiebbar ist. Beim Einschrauben des Schraubdeckels 62 wird die Pressscheibe 70 mit dem Schubzylinder 68 in axialer Richtung gedrückt und presst so das lonentauscher-Granulat 73. Auf diese Weise wird verhindert, dass das Kühlfluid bevorzugte Strömungswege im lonentauscher-Granulat 73 bildet.

Der Ausgleichsbehälter 20 verfügt ferner über einen in den Figuren 5 und 6 gezeigten Füllstandsensor 86 mit einem Schwimmer 88. Ein in den Figuren 2, 3 und 5 gezeigter Anschluss 90 des Füllstandsensors 86 ist von außen zugänglich am Boden des Ausgleichsbehälters 20 angeordnet.

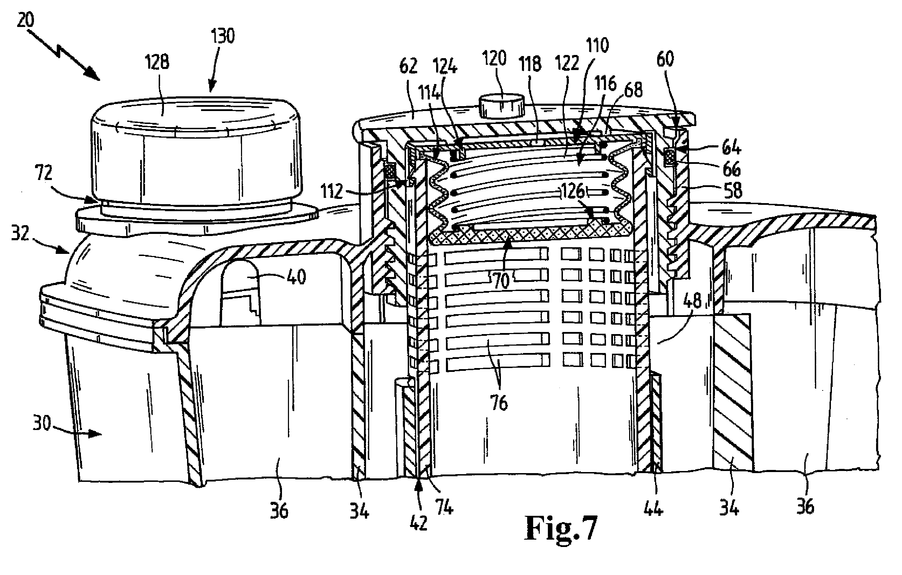

Bei einem zweiten Ausführungsbeispiel, dargestellt in der Figur 7, sind diejenigen Elemente, die zu denen des ersten, in den Figuren 1 bis 6 beschriebenen Ausführungsbeispiels ähnlich sind, mit denselben Bezugszeichen versehen, so dass bezüglich deren Beschreibung auf die Ausführungen zum ersten Ausführungsbeispiel Bezug genommen wird. Dieses Ausführungsbeispiel unterscheidet sich von ersten dadurch, dass ein Kartuschendeckel 110 vorgesehen ist, der mittels Rastverbindungen 112 fest auf die Ummantelung 74 der lonentauscherkartusche 24 aufgesteckt ist.

Die Rastverbindungen 112 umfassen paarweise zusammenwirkende Rastnasen und Rastösen. Die Rastnasen befinden sich an der radial äußeren Umfangsseite der Ummantelung 74. Die Rastösen sind an dem Randbereich des Kartuschendeckels 110 angeordnet. Der Schubzylinder 68 des Schraubdeckels 62 ist in axialer Richtung kürzer ausgebildet als beim ersten Ausführungsbeispiel. Der freie Rand des Schubzylinders 68 greift an Kartuschendeckel 110 an und drückt so die gesamte lonentauscherkartusche 24 in axialer Richtung in die Aufnahmekammer 42.

Auf der dem Inneren der lonentauscherkartusche 24 zugewandten Innenseite des Kartuschendeckels 110 ist die Pressscheibe 70 über einen elastischen, etwa hohlzylindrischen Faltenbalg 114 befestigt. Der Faltenbalg 114 ist zur Ummantelung 74 koaxial. Er ermöglicht eine axiale Bewegung der Pressscheibe 70 in der Ummantelung 74. Die Pressscheibe 70 und der Faltenbalg 114 können einstückig oder aus separaten Bauteilen zusammengesetzt sein.

Der freie Rand des Faltenbalgs 114 ist in einer Nut des Kartuschendeckels 110 befestigt und zwischen dem Kartuschendeckel 110 und dem freien Rand der Ummantelung 74 dicht eingeklemmt. Der Kartuschendeckel 110, der Faltenbalg 114 und die Pressscheibe 70 begrenzen einen Federraum 116. Der Federraum 116 ist gegenüber dem Innenraum der lonentauscherkartusche 24 dicht verschlossen, so dass kein Kühlfluid in den Federraum 116 gelangen kann. Der Kartuschendeckel 110 weist eine Druckausgleichsöffnung 118 zum Innenraum des Schubzylinders 68 auf. Der Aufnahmedeckel 62 verfügt über einen Angriffszylinder 120, an dem zum Öffnen und Schließen des Kartuschendeckels 110 mit einem Spezialwerkzeug angegriffen werden kann. Auf diese Weise wird erschwert, dass der Kartuschendeckel 110 unbefugt geöffnet werden kann. In dem Federraum 116 ist eine zur Ummantelung 74 koaxiale Spiraldruckfeder 122 angeordnet. Die Spiraldruckfeder 122 stützt sich jeweils mit einem Ende an der Innenseite des Kartuschendeckels 110 und an der dem Kartuschendeckel 110 zugewandten Seite der Pressscheibe 70 ab. Zur Zentrierung der Spiraldruckfeder 122 sind an der Innenseite des Kartuschendeckels 110 und an der entsprechenden Seite der Pressscheibe 70 jeweils ein ringförmiger Führungskragen 124 und 126 angeordnet.

Die Presseinrichtung mit dem Kartuschendeckel 110, der Pressscheibe 70 und der Spiraldruckfeder 122 bewirkt, dass die Pressung automatisch nachgestellt wird, sobald sich beispielsweise das lonentauscher-Granulat 73 setzt.

In Figur 7 ist der Nachfüllstutzen 72 mit einem Schraubverschluss 128 verschlossen gezeigt. Schraubverschluss 128 weist ein Druckausgleichssystem 130 auf.

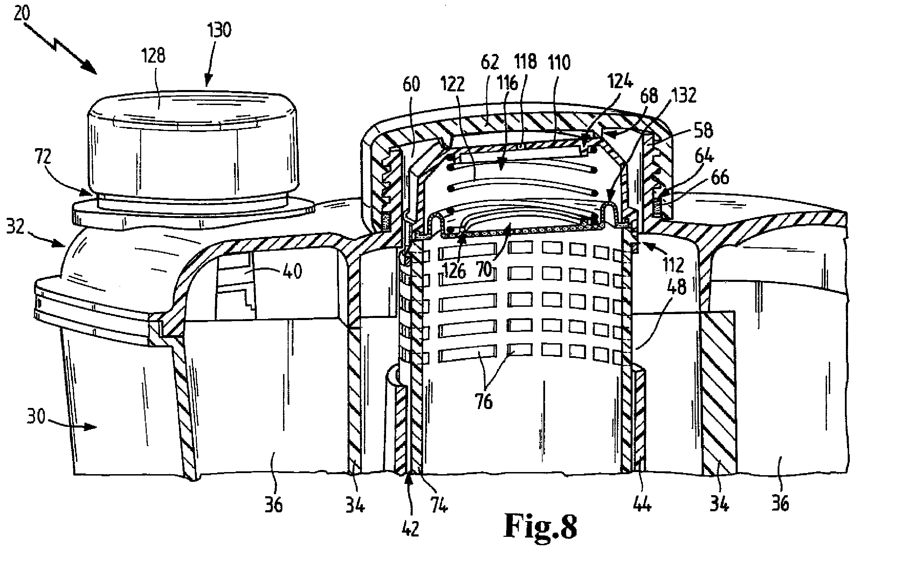

Bei einem dritten Ausführungsbeispiel, dargestellt in Figur 8, sind diejenigen Elemente, die zu denen des zweiten, in Figur 7 beschriebenen Ausführungsbeispiels ähnlich sind, mit denselben Bezugszeichen versehen, so dass bezüglich deren Beschreibung auf die Ausführungen zum zweiten Ausführungsbeispiel Bezug genommen wird. Dieses Ausführungsbeispiel unterscheidet sich von zweiten dadurch, dass der Aufnahmestutzen 58 ein Außengewinde und der Aufnahmedeckel 62 ein Innengewinde aufweist und der Aufnahmedeckel 62 auf den Aufnahmestutzen 58 geschraubt ist.

Der Kartuschendeckel 110 ist becherförmig ausgestaltet, wobei die Spiraldruckfeder 122 sich mit einem Ende in einer Senke im Boden des Kartuschendeckels 110 abstützt.

Die Pressscheibe 70 verfügt über einen äußeren beweglichen Randbereich 132, der im Profil halbkreisförmig zum Federraum 116 hin gewölbt ist. Der bewegliche Randbereich 132 ist mit seinem radial äußeren Rand in einer Nut in der Stirnseite des Randes des Kartuschendeckels 110 befestigt und zwischen dem stirnseitigen Rand der Ummantelung 74 und dem stirnseitigen Rand des Kartuschendeckels 110 dicht eingeklemmt. Der bewegliche Randbereich 132 ermöglicht analog zum Faltenbalg 114 beim zweiten Ausführungsbeispiel eine Beweglichkeit der Pressscheibe 70 axial zur lonentauscherkartusche 24, wobei der Federraum 116 dicht gegen den Innenraum der lonentauscherkartusche 24 verschlossen ist.

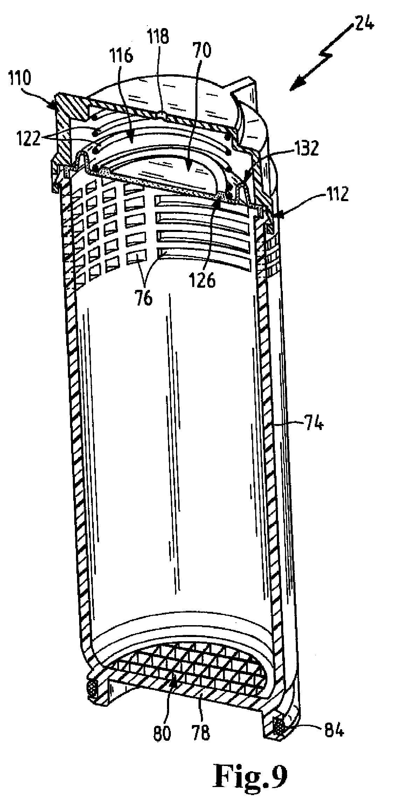

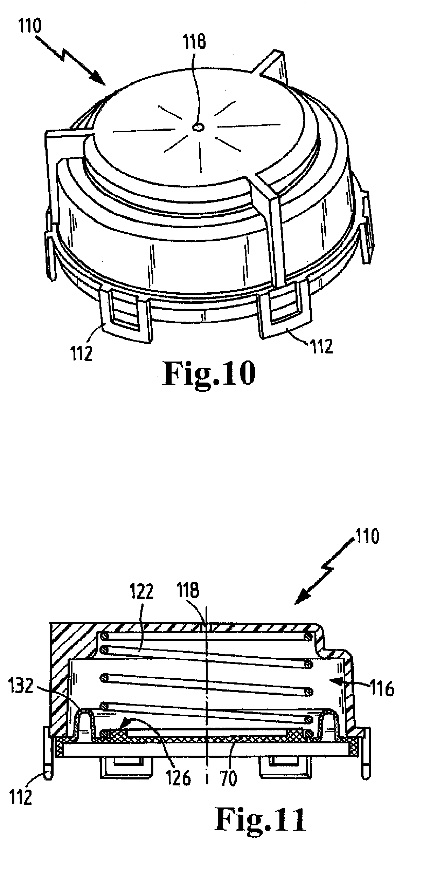

In den Figuren 9 bis 11 ist eine lonentauscherkartusche 24 mit einem Kartuschendeckel 110 gezeigt, der zu der lonentauscherkartusche 24 aus dem dritten Ausführungsbeispiel aus Figur 8 ähnlich ist. Bei dem Kartuschendeckel 110 aus den Figuren 9 bis 11 ist an der Stirnseite seines Randes keine Nut für den äußeren Rand des beweglichen Randbereichs 132 vorgesehen.

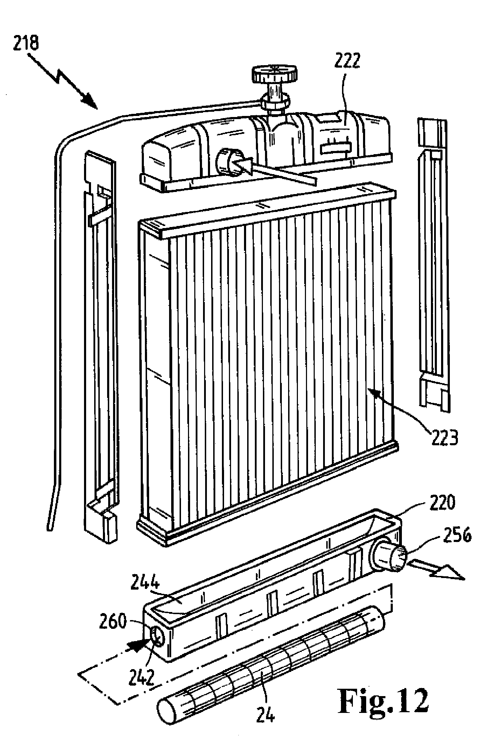

In Figur 12 ist ein Kühler 218 eines ansonsten nicht gezeigten Kühlkreislaufs, der zu dem in Figur 1 gezeigten ähnlich ist, in Explosionsdarstellung gezeigt. Der Kühler 218 umfasst in Figur 12 oben einen Verteiler 222 mit einem Zulaufstutzen für Kühlfluid. In Figur 12 unten ist ein Sammler 220 des Kühlers 218 dargestellt, der einen Ablaufstutzen 256 für das Kühlfluid aufweist. Zwischen dem Verteiler 222 und dem Sammler 220 ist ein Kühlkörper 223 angeordnet. Der Sammler 220 ist ein Behälter im Sinne der Erfindung. In dem Sammler 220 ist ein Innenzylinder 244 angeordnet, der an beiden Stirnseiten offen ist. Der Innenzylinder 244 dient als Aufnahme 242 für die lonentauscherkartusche 24, deren Ummantelung in diesem Ausführungsbeispiel durchgängig gitterartig ist. Der Sammler 220 weist an einer Seite eine verschließbare Öffnung 260 auf, durch die die lonentauscherkartusche 24 in den Innenzylinder 244 geschoben werden kann.

Anstelle des Sammlers 220 kann auch jeder andere Bereich eines Kühlers, der geeignet ist, eine Aufnahme für die lonentauscherkartusche 24 aufzuweisen, als Behälter im Sinne der Erfindung betrachtet werden.

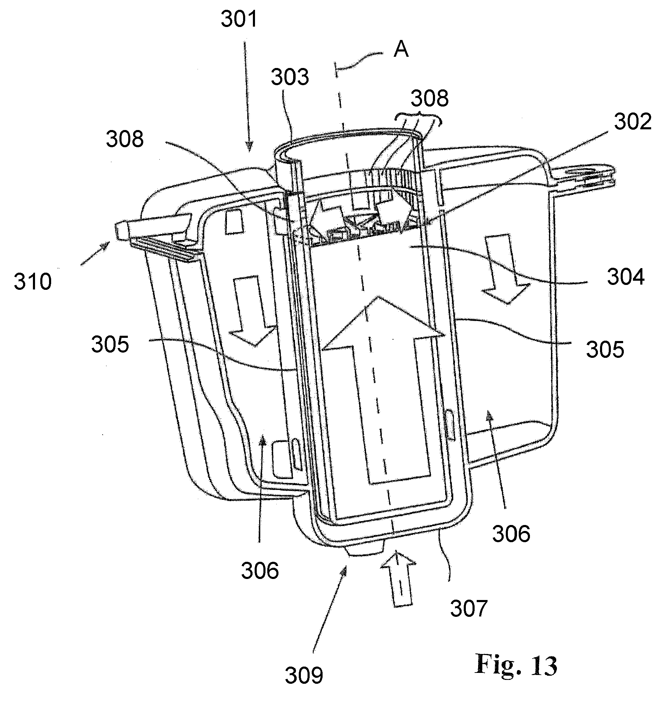

Figur 13 zeigt ein weiteres Ausführungsbeispiel, bei dem der Ausgleichsbehälter 301 in einem Brennstoffzellensystem eines Fahrzeuges angeordnet ist. Der Ausgleichsbehälter 301 ist in einem Kühlmittelkreislauf dieses Brennstoffzellensystems angeordnet und (flüssiges) Kühlmittel bzw. Kühlfluid, welches zum Kühlen der Brennstoffzellen des Brennstoffzellensystems verwendet wird, strömt durch diesen Kühlmittel-Ausgleichsbehälter. Durch dieses Durchströmen des Kühlmittels werden Verunreinigungen wie Metallionen aus dem (flüssigen) Kühlmittel entfernt.

Dazu umfasst der Kühlmittel-Ausgleichsbehälter 301 einen Ionentauscher 302 bzw. eine Ionenaustauschereinheit, welche in dem Behälter 301 integriert ist und zerstörungsfrei lösbar in den Behälter 301 einsetzbar und wieder entnehmbar ist. Insbesondere ist dazu eine Mechanik zum Verrasten des Ionentauschers 302 vorgesehen.

Die Verrastung kann durch einfache Rasthaken oder Rastbügel vorgesehen sein. Auch in radialer Richtung um den Ionentauscher 302 umlaufende Streifen mit Rasterhebungen können vorgesehen sein.

Der Behälter 301 weist eine Längsachse A auf, wobei im Wesentlichen zentral ein Aufnahmeraum 303 ausgebildet ist, in dem der Ionentauscher 302 einbringbar ist. Der Ionentauscher 302 ist als längliche zylinderförmige Patrone bzw. Kartusche ausgebildet und umfasst ein lonentauschermaterial 304 (z.B. ein geeignetes lonentauscherharz), welches in dem Ionentauscher 302 enthalten ist. Das lonentauschermaterial kann als lose Schüttung in dem Ionentauscher 302 vorliegen. Das Schüttgut wird dann allein durch die Wirkung der Schwerkraft am Boden des Ionentauschers 302 gehalten und widersteht somit aufgrund ihres Gewichts einem unerwünschten Fortspülen aufgrund der Kühlmittelströmung aus dem Ionentauscher 302. Diese Ausführungsform ist technisch besonders einfach und außerdem kostengünstig. Sollte es erforderlich sein, so kann das Schüttgut aber auch z.B. mit Hilfe eines Siebes, einer Fritte, Glasfaserpads oder dergleichen zurückgehalten werden. Im gezeigten Ausführungsbeispiel ist der Ionentauscher 302 senkrecht in dem Behälter 301 angeordnet, was bedeutet, dass die Achse A der Längsachse des Ionentauschers 302 entspricht und somit eine koaxiale Anordnung der Achsen des Ionentauschers 302 und des Behälters 301 gegeben ist. Neben dem Aufnahmeraum 303, welcher durch vertikale Wände 305 seitlich begrenzt ist, weist der Behälter 301 auch einen Sammelraum 306 auf, in dem das gereinigte Kühlmittel gesammelt wird und in den Kühlkreislauf zurückgeführt wird. Der Sammelraum 306 umgreift somit ringförmig den Aufnahmeraum 303. Ein Boden 307 des Aufnahmeraums 303 bildet zugleich auch den Boden des Behälters 301. Der Boden 307 weist eine Einlassöffnung 309 auf, welche mit dem Kühlmittelkreislauf verbunden ist. Durch die Einlassöffnung 309 hindurch strömt das Kühlmittel in den Aufnahmeraum 303. Als Kühlmittel ist beispielsweise Reinstwasser geeignet. Ferner sind als Kühlmittel auch Mischungen aus Reinstwasser und Ethylenglycol (z.B. Glysantin der Fa. BASF), sog. Kühlmittelgemische, geeignet. Durch die gezeigten Pfeile ist die Strömungsrichtung gekennzeichnet, wobei somit das Kühlmittel von unten nach oben durch den Ionentauscher 302 strömt. Das Kühlmittel bzw. Kühlfluid wird somit über eine Kühlmittelleitung und die Einlassöffnung 309 dem Behälter 301 von unten her zugeführt, wobei dann im Aufnahmeraum 303 eine Verteilung des Kühlmittels über die gesamte Fläche des Schüttguts mittels eines fluiddurchlässigen Glasfaserpads erreicht wird. Insbesondere ist der Boden des Ionentauschers 302 beabstandet zur Innenseite des Bodens 307 in dem Aufnahmeraum 303 angeordnet.

Das Kühlmittel durchströmt dann das lonentauschermaterial 304 von unten nach oben. Beim Austritt aus dem lonentauschermaterial 304 wird dieses im oberen Bereich des Ionentauschers 302 dann gemäß der nach links und rechts orientierten Pfeile durch eine Mehrzahl von Öffnungen 308, die sowohl in der Wand des Ionentauschers 302 also auch in den Wänden 305 ausgebildet sind, von dem Ionentauscher 302 in den Sammelraum 306 überströmend eingeleitet. Die Öffnungen 308 sind somit im oberen Bereich des Behälters 301 und auch im oberen Bereich des Sammelraums 306 bzw. der den Sammelraum 306 begrenzenden Wände ausgebildet. Der schachtartige Aufnahmeraum 303 ist somit zentral und mittig in dem Behälter 301 ausgebildet. Am oberen Ende können der Ionentauscher 302 und der Aufnahmeraum 303 durch einen Deckel abgedeckt sein (nicht dargestellt).

Von dem Sammelraum 306 führt seitlich oben dann wieder eine Auslassöffnung 310 weg, die mit dem Kühlkreislauf gekoppelt ist und die zum Ableiten des Kühlmittels aus dem Sammelraum 306 in den Kühlkreislauf ausgebildet ist.

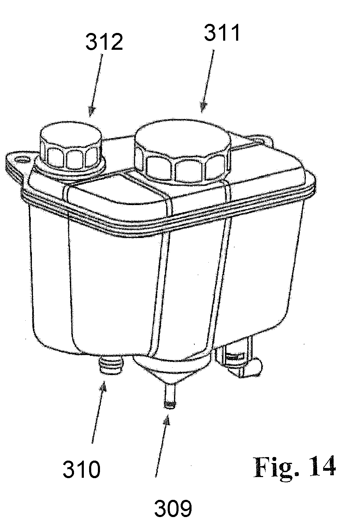

Figur 14 zeigt eine Variante des erfindungsgemäßen Kühlmittel-Ausgleichsbehälters 301. Im Unterschied zu Figur 13 ist die Auslassöffnung 310 unten an dem Kühlmittel-Ausgleichsbehälter 301 angeordnet. Dadurch können eine bessere Durchmischung des im Sammelraum 306 einströmenden Kühlmittels und eine sicherere Entlüftung des Kühlkreislaufes gewährleistet werden. Der gezeigte Kühlmittel-Ausgleichsbehälter 301 weist ferner zwei Deckel auf: Einen ersten Deckel 311 für den Aus- und Einbau bzw. das Austauschen des Ionentauschers 302; und ein zweiter Deckel 312 für ein etwaiges Nachfüllen oder Austauschen des Kühlmittels bzw. Kühlfluids.

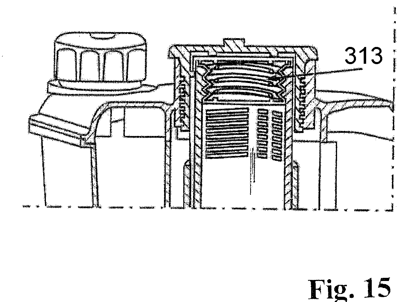

Der Deckel 312 kann, wie in Figur 15 gezeigt, eine Feder 313 aufweisen, die auf die obere Wand des Ionentauschers 302 wirkt. Dadurch kann der Ionentauscher 302 zusätzlich zu der Mechanik zum Verrasten weiter fixiert werden; um ihn noch besser gegenüber Verrutschen infolge von Rütteln o.ä. zu sichern.

Bei allen oben beschriebenen Ausführungsbeispielen des Kühlkreislaufs 10, der Ausgleichsbehälter 20, 301 der lonentauscherkartuschen 24, 302 und des Kühlers 218 sind unter anderem folgende Modifikationen möglich:
Die Erfindung ist nicht beschränkt auf Kühlkreisläufe 10 von Brennstoffzellensystemen 12 von Kraftfahrzeugen. Sie kann auch bei stationären Brennstoffzellensystemen oder bei Kühlvorrichtungen von andersartigen Funktionssystemen, beispielsweise Brennkraftmaschinen oder Klimaanlagen, verwendet werden.

Anstelle der lonentauscherkartuschen 24, 302 können auch andersartige Ionentauscher, beispielsweise Filter, für Kühlfluid in den Ausgleichsbehältern 20, 301 oder dem Kühler 218 integriert sein.

Die lonentauscherkartuschen 24, 302 können statt austauschbar auch fest in den Ausgleichsbehältern 20, 301 angeordnet sein. Beispielsweise können auch selbst regenerierende Ionentauscher vorgesehen sein, welche nicht ausgetauscht werden müssen. Die Aufnahmeöffnungen 60 für die lonentauscherkartuschen 24, 302 können statt oben auch seitlich oder unten in den Ausgleichsbehältern 20, 301 sein.

Statt in den Ausgleichsbehältern 20, 301 können die lonentauscherkartuschen 24, 302 oder andersartige Ionentauscher auch in andersartigen Behältern für das Kühlfluid integriert sein.

Anstelle der Innenzylinder 44 mit nur oben mit Durchlassöffnungen 46 versehenen Ummantelungen 74 der lonentauscherkartuschen 24, 302 können auch andersartige Bauteile vorgesehen sein, die die Strömung des Kühlfluids durch die lonentauscherkartuschen 24, 302 vorgeben. Es können auch entweder die Innenzylinder 44 oder die nur oben offenen Ummantelungen 74 der lonentauscherkartusche 24, 301 vorgesehen sein. Bei der Verwendung von Innenzylindern 44 können auch lonentauscherkartuschen verwendet werden, die über ihre ganze Höhe fluiddurchlässige Ummantelungen aufweisen.

Anstelle der Schwallwände 34 können auch andersartige Schwall- oder Schwappeinrichtungen, beispielsweise Schwallrippen, für das Kühlfluid in den Ausgleichsbehältern 20 angeordnet sein.

Der Kühlkreislauf 10 kann auch in anderer Weise aufgebaut sein. Beispielsweise können die Ausgleichsbehälter 20, 301 statt in der Bypass-Leitung 22 auch an anderer Stelle, auch im Hauptleitungssystem 14, angeordnet sein. Die Ausgleichsbehälter 20, 301 mit dem lonentauscherkartusche 24, 302 können auch auf der heißen Seite des Kühlkreislaufs 10 angeordnet sein.

Die Deckelteile 32 können mit den Basisteilen 30 der Ausgleichsbehälter 20, 301 statt verschweißt auch in anderer Weise dicht verbunden, z.B. verschraubt, sein.

Die lonentauscherkartuschen 24, 302 können statt bei Kühlvorrichtungen auch bei andersartigen Vorrichtungen zur Aufbereitung von unterschiedlichen Fluiden verwendet werden.

Die Strömung des Kühlfluids durch den Ausgleichsbehälter 20, 301 kann auch in umgekehrter Richtung erfolgen. Die Funktionen des Zulaufstutzens 52 und des Austrittsstutzens 56 sind dann vertauscht. Die lonentauscherkartusche 24, 302 wird dann von oben nach unten durchströmt. Die Zuführung des Kühlfluids in den Ausgleichsbehälter kann auch von oben erfolgen.

## Patentansprüche

1. Kühlvorrichtung (10) eines Funktionssystems, insbesondere eines Brennstoffzellensystems (12), insbesondere eines Kraftfahrzeugs, mit einem Leitungssystem (14, 22) für ein Kühlfluid, das zur Kühlung mit dem Funktionssystem (12) verbunden ist, mit einem Behälter (20; 220; 301) für das Kühlfluid, der mit dem Leitungssystem (14, 22) fluidleitend verbunden ist, und mit einem Ionentauscher (24, 302) zur Aufbereitung des Kühlfluids, der mit dem Leitungssystem (14, 22) fluidleitend verbunden ist, wobei der Behälter (20; 220; 301) eine Aufnahme (42; 242; 303) für den Ionentauscher (24) aufweist, wobei der Behälter ein Ausgleichsbehälter (20; 301) ist, **dadurch gekennzeichnet, dass** das Kühlfluid von unten nach oben durch den Ionentauscher (24, 302) strömt und in dem Behälter (20) Schwall- oder Schwappeinrichtungen, insbesondere Schwallwände (34) und/oder Schwallrippen, für das Kühlfluid angeordnet sind.

2. Kühlvorrichtung nach Anspruch 1, **dadurch gekennzeichnet, dass** der Behälter (20; 220; 301) insbesondere räumlich oben eine verschließbare Öffnung (60; 260) aufweist, durch die der Ionentauscher (24, 302) in einen Innenraum des Behälters (20; 220; 301) insbesondere austauschbar eingebracht werden kann.

3. Kühlvorrichtung nach einem der vorigen Ansprüche, **dadurch gekennzeichnet, dass** der Ionentauscher eine lonentauscherkartusche (24; 302) ist.

4. Kühlvorrichtung nach Anspruch 3, **dadurch gekennzeichnet, dass** der lonentauscher (24) eine Presseinrichtung (70; 110, 122) zur Pressung eines granulatartigen lonentauschermediums (73) aufweist.

5. Kühlvorrichtung nach einem der vorigen Ansprüche, **dadurch gekennzeichnet, dass** der Behälter (20; 220) und/oder der Ionentauscher (24) wenigstens ein Bauteil, insbesondere eine Ummantelung (44, 74; 244) für den Ionentauscher (24), aufweist, das eine Strömung des Kühlfluids durch den Ionentauscher (24) vorgibt.

6. Kühlvorrichtung nach einem der vorigen Ansprüche, **dadurch gekennzeichnet, dass** der Behälter (20) sich in einer Bypass-Leitung (22) befindet, die mit einem Hauptleitungssystem (14) zur Kühlung des Brennstoffzellensystems (12) fluidleitend verbunden ist.

7. Kühlfluidbehälter, insbesondere Kühlfluid-Ausgleichsbehälter (20, 301), einer Kühlvorrichtung (10) eines Funktionssystems, insbesondere eines Brennstoffzellensystems (12), insbesondere eines Kraftfahrzeugs, der mit einem Leitungssystem (14, 42) für ein Kühlfluid fluidleitend verbindbar ist, das zur Kühlung mit dem Funktionssystem (12) verbunden ist, wobei das Leitungssystem (14, 42) fluidleitend mit einem Ionentauscher (24, 302) zur Aufbereitung des Kühlfluids verbunden ist, wobei der Kühlfluidbehälter (20, 301) einen stehend in dem Kühlfluidbehälter (20, 301) angeordneten Ionentauscher (24, 302) aufweist, **dadurch gekennzeichnet, dass** das Kühlfluid von unten nach oben durch den Ionentauscher (24, 302) strömt und in dem Behälter (20) Schwall- oder Schwappeinrichtungen, insbesondere Schwallwände (34) und/oder Schwallrippen, für das Kühlfluid angeordnet sind.

8. Kühlfluidbehälter nach Anspruch 7, **dadurch gekennzeichnet, dass** der lonentauscher (24, 302) so in dem Kühlfluidbehälter (20, 301) angeordnet ist, dass die Längsachse (A) des Kühlfluidbehälters (20, 301) und die Längsachse (A) des lonentauschers (24, 302) parallel oder koaxial orientiert sind.

9. Kühlfluidbehälter nach Anspruch 8, **dadurch gekennzeichnet, dass** der lonentauscher (24, 302) lösbar, bevorzugt verrastet, in dem Kühlfluidbehälter (20, 301) angeordnet ist.

10. Kühlfluidbehälter nach einem der Ansprüche 8 oder 9, **dadurch gekennzeichnet, dass** die Aufnahme als schachtartiger Aufnahmeraum (42, 303) für den lonentauscher (24, 302) ausgebildet ist, der durch seitliche Wände (44, 305) von einem Sammelraum (36, 306) für das Kühlfluid separiert ist, wobei im oberen Bereich der Wände (44, 305) zumindest eine Öffnung (48, 308) zum Überströmen des durch den Ionentauscher (24, 302) strömenden Kühlfluids in den Sammelraum (36, 306) ausgebildet ist, wobei der Sammelraum (36, 306) den Aufnahmeraum (42, 303) bevorzugt ringartig umgreift.

11. Kühlfluidbehälter nach Anspruch 10, **dadurch gekennzeichnet, dass** der Boden (46, 307) des schachtartigen Aufnahmeraums (42, 303) der Boden des Kühlfluidbehälters (20, 301) ist und in dem Boden (46, 307) zumindest eine Einlassöffnung (52, 309) für das Kühlfluid in den Aufnahmeraum (42, 303) ausgebildet ist.

12. Kühlfluidbehälter nach einem der Ansprüche 10 oder 11, **dadurch gekennzeichnet, dass** der Kühlfluidbehälter (301) an seinem oberen Ende eine Auslassöffnung (310) zum Ableiten des Kühlfluids aus dem Sammelraum (306) aufweist.

13. Kühlfluidbehälter nach einem der Ansprüche 8 bis 12, **gekennzeichnet durch** einen Deckel (311) für den Aus- und Einbau des Ionentauschers (302), der eine Feder (313) aufweist, um auf die obere Wand des Ionentauschers (302) zu wirken.

14. Kühlfluidbehälter nach einem der Ansprüche 8 bis 13, **gekennzeichnet durch** einen Füllstandssensor (86), bevorzugt mit einem Schwimmer (88).

## Claims

1. Cooling device (10) of a functional system, in particular of a fuel cell system (12), in particular of a motor vehicle, with a duct system (14, 22) for cooling fluid which is connected for cooling with the functional system (12), with a reservoir (20; 220; 301) for the cooling fluid which is fluidly connected with the duct system (14, 22), and with an ion exchanger (24, 302) for treating the cooling fluid which is fluidly connected with the duct system (14, 22), wherein the reservoir (20; 220; 301) features a receptacle (42; 242; 303) for the ion exchanger (24), wherein the reservoir is compensating tank (20; 301), **characterized in that** the cooling fluid flows from the bottom to the top through the ion exchanger (24, 302) and that surge or slosh devices, in particular surge baffles (34) and/or surge ribs, for the cooling fluid are disposed in the reservoir (20).

2. Cooling device according to claim 1, **characterized in that** the reservoir (20; 220; 301) features in particular spatially arranged on top a closable opening (60; 260) through which the ion exchanger (24, 302) can be inserted in particular replaceably into an interior space of the reservoir (20; 220; 301).

3. Cooling device according to one of the above claims, **characterized in that** the ion exchanger is an ion exchanger cartridge (24; 302).

4. Cooling device according to claim 3, **characterized in that** the ion exchanger (24) features a pressing device (70; 110, 122) for pressing a granular ion exchanger medium (73).

5. Cooling device according to one of the above claims, **characterized in that** the reservoir (20; 220) and/or the ion exchanger (24) features at least one component, in particular a casing (44, 74; 244) for the ion exchanger (24), which imposes a flow of the cooling fluid through the ion exchanger (24).

6. Cooling device according to one of the above claims, **characterized in that** the reservoir (20) is arranged in a bypass duct (22) which is fluidly connected with a main duct system (14) for cooling the fuel cell system (12).

7. Cooling fluid reservoir, in particular cooling fluid compensating tank (20, 301), of a cooling device (10) of a functional system, in particular of a fuel cell system (12) in particular of a motor vehicle, which is fluidly connectable with a duct system (14, 42) for a cooling fluid, which is connected for cooling with the functional system (12), wherein the duct system (14, 42) is fluidly connected with an ion exchanger (24, 302) for treating the cooling fluid, wherein the cooling fluid reservoir (20, 301) features an ion exchanger (24, 302) disposed upright in the cooling fluid reservoir (20, 301), **characterized in that** the cooling fluid flows from the bottom to the top through the ion exchanger (24, 302) and that surge or slosh devices, in particular surge baffles (34) and/or surge ribs, for the cooling fluid are disposed in the reservoir (20).

8. Cooling fluid reservoir according to claim 7, **characterized in that** the ion exchanger (24, 302) is disposed in the cooling fluid reservoir (20, 301) in such a way that the longitudinal axis (A) of the cooling fluid reservoir (20, 301) and the longitudinal axis (A) of the ion exchanger (24, 302) are oriented parallel or coaxially.

9. Cooling fluid reservoir according to claim 8, **characterized in that** the ion exchanger (24, 302) is disposed detachably, preferably locked, in the cooling fluid reservoir (20, 301).

10. Cooling fluid reservoir according to one of the claims 8 or 9, **characterized in that** the receptacle is designed as shaft-like receptacle space (42, 303) for the ion exchanger (24, 302), which is separated from a collecting chamber (36, 306) for the cooling fluid by lateral walls (44, 305), wherein in the upper section of the walls (44, 305) at least one opening (48, 308) is designed for the overflowing of the cooling fluid flowing through the ion exchanger (24, 302) into the collecting chamber (36, 306), wherein the collecting chamber (36, 306) encloses the receptacle space (42, 303) preferably in a ring-type manner.

11. Cooling fluid reservoir according to claim 10, **characterized in that** the bottom (46, 307) of the shaft-like receptacle space (42, 303) is the bottom of the cooling fluid reservoir (20, 301) and that at least one inlet opening (52, 309) for the cooling fluid in the receptacle space (42, 303) is realized in the bottom (46, 307).

12. Cooling fluid reservoir according to one of the claims 10 or 11, **characterized in that** the cooling fluid reservoir (301) features at its upper end an outlet opening (310) for discharging the cooling fluid from the collecting chamber (306).

13. Cooling fluid reservoir according to one of the claims 8 to 12, **characterized by** a cover (311) for disassembling and assembling the ion exchanger (302) which features a spring (313) in order to act on the upper wall of the ion exchanger (302).

14. Cooling fluid reservoir according to one of the claims 8 to 13, **characterized by** a level sensor (86), preferably with a float (88).

## Revendications

1. Dispositif de refroidissement (10) d'un système fonctionnel, notamment d'un système de pile à combustible (12), notamment d'un véhicule automobile, avec un système de conduites (14, 22) pour le liquide de refroidissement qui est relié au système fonctionnel (12) à des fins de refroidissement, avec un récipient (20; 220; 301) pour le liquide de refroidissement qui est relié, de manière à acheminer le liquide, au système de conduites (14, 22), et avec un échangeur d'ions (24, 302) destiné au traitement du liquide de refroidissement et relié, de manière à acheminer le liquide, au système de conduites (14, 22), le récipient (20; 220; 301) étant pourvu d'un logement (42; 242; 303) pour l'échangeur d'ions (24), le récipient étant un réservoir de compensation (20; 301), **caractérisé en ce que** le liquide de refroidissement coule du bas vers le haut à travers l'échangeur d'ions (24, 302) et que des dispositifs de protection contre les jets ou les vagues, en particulier des parois anti-débordement (34) et/ou des rainures anti-débordement, sont disposés dans le récipient (20) pour le liquide de refroidissement.

2. Dispositif de refroidissement selon la revendication 1, **caractérisé en ce que** le récipient (20; 220; 301) présente notamment en haut une ouverture obturable (60; 260) à travers laquelle l'échangeur d'ions (24, 302) peut être inséré dans un espace intérieur du récipient (20; 220; 301), en particulier de manière échangeable.

3. Dispositif de refroidissement selon l'une des revendications précédentes, **caractérisé en ce que** l'échangeur d'ions est une cartouche d'échangeur d'ions (24; 302).

4. Dispositif de refroidissement selon la revendication 3, **caractérisé en ce que** l'échangeur d'ions (24) présente un dispositif presseur (70; 110, 122) destiné à presser un milieu d'échangeur d'ions (73) sous forme de granulés.

5. Dispositif de refroidissement selon l'une des revendications précédentes, **caractérisé en ce que** le récipient (20; 220) et/ou l'échangeur d'ions (24) est doté d'au moins un composant, en particulier d'une enveloppe (44, 74; 244) pour l'échangeur d'ions (24), qui définit un flux du liquide de refroidissement à travers l'échangeur d'ions (24).

6. Dispositif de refroidissement selon l'une des revendications précédentes, **caractérisé en ce que** le récipient (20) est situé dans une conduite de dérivation (22) qui est reliée, de manière à acheminer le liquide, à un système de conduites principal (14) destiné au refroidissement du système de pile à combustible (12).

7. Récipient de liquide de refroidissement, en particulier réservoir de compensation de liquide de refroidissement (20, 301), d'un dispositif de refroidissement (10) d'un système fonctionnel, notamment d'un système de pile à combustible (12) notamment d'un véhicule automobile, lequel peut être relié, de manière à acheminer le liquide, à un système de conduites (14, 42) pour un liquide de refroidissement qui est relié au système fonctionnel (12) à des fins de refroidissement, le système de conduites (14, 42) étant relié, de manière à acheminer le liquide, à un échangeur d'ions (24, 302) destiné au traitement du liquide de refroidissement, le récipient de liquide de refroidissement (20, 301) présentant un échangeur d'ions (24, 302) installé verticalement dans le récipient de liquide de refroidissement (20, 301), **caractérisé en ce que** le liquide de refroidissement coule du bas vers le haut à travers l'échangeur d'ions (24, 302) et que des dispositifs de protection contre les jets ou les vagues, en particulier des parois anti-débordement (34) et/ou des rainures anti-débordement, sont disposés dans le récipient (20) pour le liquide de refroidissement.

8. Récipient de liquide de refroidissement selon la revendication 7, **caractérisé en ce que** l'échangeur d'ions (24, 302) est disposé dans le récipient de liquide de refroidissement (20, 301) de manière à ce que l'axe longitudinal (A) du récipient de liquide de refroidissement (20, 301) et l'axe longitudinal (A) de l'échangeur d'ions (24, 302) soient parallèles ou coaxiaux.

9. Récipient de liquide de refroidissement selon la revendication 8, **caractérisé en ce que** l'échangeur d'ions (24, 302) est disposé de manière amovible, et est de préférence enclenché, dans le récipient de liquide de refroidissement (20, 301).

10. Récipient de liquide de refroidissement selon l'une des revendications 8 ou 9, **caractérisé en ce que** le logement est exécuté en tant que logement (42, 303) du type puits pour l'échangeur d'ions (24, 302), lequel est séparé d'un espace collecteur (36, 306) pour le liquide de refroidissement par des parois latérales (44, 305), au moins une ouverture (48, 308) servant à faire passer le liquide de refroidissement coulant à travers l'échangeur d'ions (24, 302) vers l'espace collecteur (36, 306) étant réalisée dans la partie supérieure des parois (44, 305), l'espace collecteur (36, 306) entourant, de préférence de manière annulaire, le logement (42, 303).

11. Récipient de liquide de refroidissement selon la revendication 10, **caractérisé en ce que** le fond (46, 307) du logement (42, 303) du type puits est le fond du récipient de liquide de refroidissement (20, 301) et que, dans le fond (46, 307), au moins une ouverture d'admission (52, 309) pour le liquide de refroidissement est réalisée dans le logement (42, 303).

12. Récipient de liquide de refroidissement selon l'une des revendications 10 ou 11, **caractérisé en ce que** le récipient de liquide de refroidissement (301) présente à son extrémité supérieure une ouverture de sortie (310) permettant d'évacuer le liquide de refroidissement de l'espace collecteur (306).

13. Récipient de liquide de refroidissement selon l'une des revendications 8 bis 12, **caractérisé par** un couvercle (311) pour le démontage et le montage de l'échangeur d'ions (302), lequel est pourvu d'un ressort (313) agissant sur la paroi supérieure de l'échangeur d'ions (302).

14. Récipient de liquide de refroidissement selon l'une des revendications 8 à 13, **caractérisé par** un capteur de niveau (86), de préférence avec un flotteur (88).
